# EUROPÄISCHE PATENTSCHRIFT

(11) **EP 3 877 686 B1**
(45) Veröffentlichungstag und Bekanntmachung des Hinweises auf die Patenterteilung: **04.10.2023**
(21) Anmeldenummer: 19798567.4
(22) Anmeldetag: 31.10.2019
(51) Int. Cl.: F25B 9/00, F16L 21/08, F16L 21/04, F16L 21/035, B60H 1/00

(54) **BLOCKVERBINDUNGSANORDNUNG FÜR EINE KÄLTEANLAGE EINES KRAFTFAHRZEUGS, KÄLTEANLAGE UND KRAFTFAHRZEUG**
UNIT CONNECTION ARRANGEMENT FOR A REFRIGERATION SYSTEM OF A MOTOR VEHICLE, REFRIGERATION SYSTEM AND MOTOR VEHICLE
ENSEMBLE DE LIAISON DE BLOCS POUR UNE INSTALLATION FRIGORIFIQUE D'UN VÉHICULE AUTOMOBILE, INSTALLATION FRIGORIFIQUE ET VÉHICULE AUTOMOBILE

(30) Priorität: 05.11.2018 DE 102018218823
(43) Veröffentlichungstag der Anmeldung: 15.09.2021
(73) Patentinhaber: AUDI AG, 85045 Ingolstadt (DE)
(72) Erfinder: SCHROEDER, Dirk, 85077 Manching (DE); REBINGER, Christian, 80807 München (DE); ROTTENKOLBER, Helmut, 93349 Mindelstetten (DE)
(86) Internationale Anmeldenummer: PCT/EP2019/079873
(87) Internationale Veröffentlichungsnummer: WO 2020/094502

(56) Entgegenhaltungen:
- CH-A2- 705 623
- DE-A1-102016 000 494
- US-A1- 2004 178 631
- US-A1- 2007 236 008

## Beschreibung

Die Erfindung betrifft eine Blockverbindungsanordnung gemäß dem Oberbegriff von Anspruch 1 für eine Kälteanlage eines Kraftfahrzeugs mit einem ersten Blockelement, das einen ersten Kältemittelleitungsabschnitt aufweist, und mit einem zweiten Blockelement, das einen zweiten Kältemittelleitungsabschnitt aufweist, wobei der erste Kältemittelleitungsabschnitt und der zweite Kältemittelleitungsabschnitt unter Zwischenlage von wenigstens einem Dichtungselement miteinander verbindbar oder verbunden sind.

Bei Kälteanlagen, die mit dem Kältemittel R744 (Kohlendioxid CO₂) betrieben werden, hat sich gezeigt, dass aufgrund der hohen Drücke und Temperaturen eine robuste Verbindungstechnik erforderlich ist, um verschiedene Komponenten der Kälteanlage dicht miteinander verbinden zu können. Es ist ferner bekannt, dass das Kältemittel R744 in Elastomere (Kunststoffe) diffundieren kann, die verbreitet als Material für Dichtungselemente verwendet werden. Entsprechend werden in solchen Kälteanlagen regelmäßig metallische Flachdichtungen eingesetzt.

Eine derartige Blockverbindungsanordnung ist beispielsweise aus der US 2007/236008 A1 bekannt. Eine weitere solche Blockverbindungsanordnung ist auch aus der US 2004/178631 A1 bekannt.

Hinsichtlich einer weiteren Blockverbindunganordnung ohne Verbindungsstift wird auf die DE 10 2016 000 494 A1 hingewiesen. Ferner zeigt die CH 705 623 A2 eine Steckverbindungsanordnung, bei der ein Fluid führenden Schlauch mit einem Blockelement verbunden wird und mittels einer separaten Platte daran gesichert wird.

Es hat sich gezeigt, dass bei solchen Kälteanlagen das Problem auftritt, dass die Dichtigkeit durch leichtes Verdrehen unter Einwirkung von Querkräften oder Torsion verschlechtert werden kann, insbesondere, wenn Kältemittelleitungsabschnitte nicht mehr exakt zueinander und zu dem dazwischen angeordneten Dichtungselement ausgerichtet sind. Es kann beispielsweise vorkommen, dass eine ringförmige Flachdichtung leicht exzentrisch zwischen den Kältemittelleitungsabschnitten zu liegen kommt, wodurch unerwünschte Leckagen im Kältemittelkreis entstehen können.

Die der Erfindung zu Grunde liegende Aufgabe wird darin gesehen, eine Blockverbindungsanordnung bereitzustellen, bei der das Auftreten von Leckagen im Kältemittelkreislauf aufgrund von externen Krafteinwirkungen reduziert oder verhindert werden kann.

Diese Aufgabe wird gelöst durch eine Blockverbindungsanordnung mit den Merkmalen des Patentanspruchs 1, durch eine Kälteanlage mit den Merkmalen des Patentanspruchs 10 und durch ein Kraftfahrzeug mit den Merkmalen des Anspruchs 12. Vorteilhafte Ausgestaltungen mit zweckmäßigen Weiterbildungen sind in den abhängigen Patentansprüchen angegeben.

Vorgeschlagen wird also eine Blockverbindungsanordnung für eine Kälteanlage eines Kraftfahrzeugs mit einem ersten Blockelement, das einen ersten Kältemittelleitungsabschnitt aufweist, und mit einem zweiten Blockelement, das einen zweiten Kältemittelleitungsabschnitt aufweist, wobei der erste Kältemittelleitungsabschnitt und der zweite Kältemittelleitungsabschnitt unter Zwischenlage von wenigstens einem Dichtungselement miteinander verbindbar oder verbunden sind. Dabei ist vorgesehen, dass die Blockverbindungsanordnung wenigstens einen Verbindungsstift aufweist, der in einer Stiftaufnahme aufnehmbar oder aufgenommen ist, wobei die Stiftaufnahme einen ersten Stiftaufnahmeabschnitt in dem ersten Blockelement und einen zweiten Stiftaufnahmeabschnitt in dem zweiten Blockelement aufweist, derart dass im verbundenen Zustand der Blockelemente der Verbindungsstift in dem ersten Stiftaufnahmeabschnitt und dem zweiten Stiftaufnahmeabschnitt aufgenommen ist.

Das Vorsehen eines solchen Verbindungsstifts, der sowohl in dem ersten Blockelement als auch in dem zweiten Blockelement aufgenommen ist, ermöglicht eine verdrehsichere Verbindung zwischen den beiden Blockelementen. Der Verbindungsstift kann Querkräfte oder/und Torsionskräfte aufnehmen, die auf die Blockverbindungsanordnung wirken. Insbesondere wird durch den Verbindungsstift verhindert, dass sich die beiden Blockelemente im Bereich der Kältemittelleitungsabschnitte relativ zueinander bewegen oder verschieben, so dass im Bereich des Dichtungselements bzw. des Übergangs von dem ersten Blockelement zu dem zweiten Blockelement der Leckagebildung entgegengewirkt werden kann.

Mit anderen Worten kann eine Relativbewegung der beiden Blockelemente vor oder beim Fixieren bzw. Verschrauben reduziert oder sogar ausgeschlossen werden. Ferner wird durch die eingeschränkte oder verhinderte Relativbewegung der beiden Blockelemente auch ein Verrutschen bzw. eine Positionsänderung der Flachdichtung reduziert oder sogar verhindert werden, die zwischen den beiden Blockelementen angeordnet ist. Durch das Vorsehen des wenigstens einen Verbindungsstifts ist das Herstellen einer dichten Verbindung zwischen den Blockelemente sicherer zu erreichen. Ferner kann durch das Vorsehen von wenigstens einem Verbindungsstift auch eine korrekte relative Positionierung der beiden Blockelemente zueinander beibehalten werden für den unwahrscheinlich Fall, dass die Verschraubung nicht ausreichend fest angezogen sein sollte. Insoweit kann auch bei einer nicht korrekt festgezogenen Schraubverbindung eine ausreichende Stabilisierung der beiden Blockelemente zueinander erreicht werden.

Um eine ausreichende Stabilität zu gewährleisten kann der Verbindungsstift aus Metall hergestellt sein. Insbesondere kann er auch aus einem härteren Metall hergestellt sein als die Blockelemente, in denen er aufgenommen ist. Die Blockelemente können beispielsweise aus Aluminium oder einem Aluminiumlegierung hergestellt sein, wohingegen der Verbindungsstift aus einem Stahl oder einer Stahllegierung hergestellt sein kann.

Für eine einfache Herstellung kann der Verbindungsstift im Querschnitt ein kreisförmiges Profil aufweisen. Alternativ kann der Verbindungsstift im Querschnitt ein ovales oder ellipsenförmiges oder vieleckiges Profil aufweisen. Um eine nahezu spielfreie Aufnahme des Verbindungsstifts in den Blockelementen zu ermöglichen, kann die Stiftaufnahme eine zum Querschnittsprofil des Verbindungsstifts passende Form aufweisen.

Während ein kreisförmiges Profil von Verbindungsstift und Stiftaufnahme den Einbau vereinfacht, kann durch andere geometrische Profilformen von Verbindungsstift und Stiftaufnahme eine verbesserte genaue Ausrichtung der Blockelemente zueinander erreicht werden.

Die Blockverbindungsanordnung kann zwei Verbindungsstifte und zwei zugeordnete Stiftaufnahmen aufweisen, in denen jeweils ein Verbindungsstift aufnehmbar oder aufgenommen ist. Hierdurch wird die Sicherung gegen Verdrehung der beiden Blockelemente zueinander noch verstärkt bzw. verbessert.

Erfindungsgemäß weist die Blockverbindungsanordnung eine Schraubverbindungsanordnung auf mit einer Schraube, durch die das erste Blockelement und das zweite Blockelement gegeneinander verspannbar oder verspannt sind, wobei zwischen einem Schraubenkopf oder einer Mutter der Schraubverbindungsanordnung und einer Außenseite des ersten Blockelements oder einer Außenseite des zweiten Blockelements eine zum Schraubenkopf oder zur Mutter hin konvex gewölbte, elastische Unterlegscheibe aufgenommen ist. Die Unterlegscheibe kann aus einem Metall oder einer Metalllegierung hergestellt sein.

Dabei kann die Schraubverbindungsanordnung derart ausgelegt sein, dass das Verschraubmoment im verbundenen Zustand der Blockelemente von 10Nm bis 20Nm beträgt, insbesondere von 12Nm bis 18Nm.

Die Unterlegscheibe kann derart ausgeführt sein, dass sie im verbundenen Zustand der Blockelemente nur elastisch verformt ist.

Durch die konvex und elastisch ausgebildete Unterlegscheibe kann eine dauerhafte Spannkraft auf die miteinander verbundenen bzw. verspannten Blockelemente ausgeübt werden. Ferner kann hierdurch über die Lebensdauer der Schraubverbindungsanordnung bzw. der Unterlegscheibe ein Setzverhalten ausgeglichen werden.

Das Dichtungselement der Blockverbindungsanordnung ist vorzugsweise als metallische Flachdichtung ausgebildet. Die metallische Flachdichtung kann auch eine die Dichtwirkung verbessernde Beschichtung oder Oberflächenbehandlung aufweisen. Die Flachdichtung kann eine abdichtende Beschichtung aufweisen, insbesondere kann sie eine Beschichtung aus einem Elastomer aufweisen, wodurch die Abdichtung verbessert werden kann. Wenn die Flachdichtung mit einem Elastomer beschichtet ist, lässt sie sich aufgrund der wirkenden Reibungskräfte weniger leicht relativ zu denBlockelementen bewegen verglichen mit einer rein metallischen Flachdichtung, die an den ebenfalls metallischen Blockelementen anliegt. Eine mit Elastomer beschichtete Flachdichtung in Kombination mit wenigstens einem Verbindungsstift kann daher zu einer verbesserten Relativpositionierung von Flachdichtung und Blockelementen sowie zu einer gesicherten und verbesserten Dichtungswirkung führen.

Die oben genannte Aufgabe wird auch gelöst durch eine Kälteanlage für ein Kraftfahrzeug mit wenigstens einer oben beschriebenen Blockverbindungsanordnung. Dabei kann das in der Kälteanlage zirkulierende Kältemittel R744 (Kohlendioxid) sein.

Ferner wird die Aufgabe auch gelöst durch ein Kraftfahrzeug mit einer solchen Kälteanlage.

Weitere Vorteile, Merkmale und Einzelheiten der Erfindung ergeben sich aus den Patentansprüchen, der nachfolgenden Beschreibung bevorzugter Ausführungsformen sowie anhand der Zeichnungen. Dabei zeigt:
- Fig. 1: eine vereinfachte und schematische Schnittansicht einer Blockverbindungsanordnung für eine Kälteanlage, wobei die Schnittansicht entsprechend der Schnittlinie I-I der Figuren 2A und 2B gezeigt ist;
- Fig. 2: in den Teilfiguren A) und B) jeweilige teilgeschnittene Draufsichten auf ein erstes Blockelement bzw. ein zweites Blockelement der Blockverbindungsanordnung der Fig. 1 etwa entsprechend den Linien A-A bzw. B-B der Fig. 1.

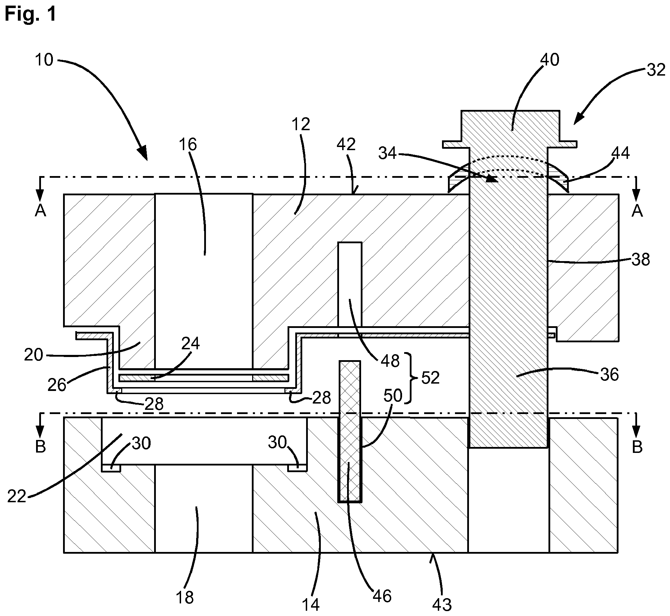

In Fig. 1 ist schematisch und vereinfacht ein Blockverbindungsanordnung 10 dargestellt. Die Blockverbindungsanordnung 10 umfasst ein erstes Blockelement 12, das aufgrund der zeichnerischen Darstellung auch als oberes Blockelement bezeichnet werden kann. Ferner umfasst die Blockverbindungsanordnung 10 ein zweites Blockelement 14, das aufgrund der zeichnerischen Darstellung auch als unteres Blockelement bezeichnet werden kann.

Die beiden Blockelemente 12, 14 sind in einem voneinander entfernten Zustand gezeigt, um die einzelnen Elemente besser darstellen und erklären zu können. Es ist selbstverständlich, dass die beiden Blockelemente 12, 14 bezogen auf die Darstellung der Fig. 1 in vertikaler Richtung aufeinander zu bewegt werden könnten, um einen verbundenen bzw. zusammengesetzten Zustand der Blockverbindunganordnung 10 zu erreichen bzw. zu zeigen.

In dem ersten Blockelement 12 ist ein erste Kältemittelleitungsabschnitt 16 vorgesehen. Das zweite Blockelement 14 weist einen zweiten Kältemittelleitungsabschnitt 18 auf. Das erste Blockelement 12 weist einen im Bereich des ersten Kältemittelleitungsabschnitts 16 ausgebildeten Kopplungsvorsprung 20 auf. Der Kopplungsvorsprung 20 ist in eine entsprechend ausgebildete Kopplungsaufnahme 22 einführbar, die an dem zweiten Blockelement 14 ausgebildet ist.

Um bei der Verbindung der beiden Blockelemente 12, 14 bzw. der beiden Kältemittelleitungsabschnitte 16, 18 eine dichte Kältemittelleitung bereitzustellen ist zwischen den beiden Kältemittelleitungsabschnitten 16, 18 ein Dichtungselement 24 vorgesehen. Das Dichtungselement 24 ist hier als ringförmige Flachdichtung ausgeführt, insbesondere als metallische Flachdichtung. Das Dichtungselement 24 kann durch eine optionale Verliersicherung 26 beispielsweise an dem ersten Blockelement 12 gehalten sein. Hierzu weist die Verliersicherung 26 im Bereich des Dichtungselement 24 einen radialen Vorsprung 28 auf, auf dem das Dichtungselement 24 aufliegen kann, wenn das erste Blockelement 12 von dem zweiten Blockelement 14 entfernt wird. Beim Zusammensetzen der beiden Blockelemente 12, 14 wird der radiale Vorsprung 28 der Verliersicherung 26 in einer nutartigen Vertiefung 30 bzw. Ringnut aufgenommen, die in dem zweiten Blockelement 14 ausgebildet ist. Hierdurch ist gewährleistet, dass das Dichtungselement 24 in direktem Kontakt mit den beiden Blockelementen 12, 14 steht, um die Verbindung der beiden Kältemittelleitungsabschnitte 16, 18 zuverlässig abzudichten.

Die beiden Blockelemente 12, 14 werden mittels einer Schraubverbindungsanordnung 32 miteinander verbunden bzw. gegeneinander verspannt. Die Schraubverbindungsanordnung 32 umfasst eine Schraube 34, deren Schaft 36 durch entsprechende Öffnungen 38 in den Blockelementen 12, 14 geführt ist. Im dargestellten Beispiel weist die Schraube 34 einen Schraubenkopf 40 auf. Der Schraubenkopf 40 ist hier beispielhaft an der Außenseite 42 des ersten Blockelements 12 vorgesehen.

Zwischen dem Schraubenkopf 40 und der Außenseite 42 des ersten Blockelements 12 ist eine Unterlegscheibe 44 angeordnet. Die Unterlegscheibe 44 ist gewölbt bzw. gebogen ausgebildet, insbesondere ist sie in Richtung des Schraubenkopfes 40 konvex ausgebildet. Die Unterlegscheibe 44 ist elastisch ausgebildet und unterliegt im verbundenen Zustand der beiden Blockelemente 12, 14, also im angezogenen Zustand der Schraubverbindungsanordnung 32, lediglich elastischen Verformungen, aber keinen plastischen Verformungen. Hierdurch wird gewährleistet, dass die Blockelemente 12, 14 dauerhaft mit ausreichender Kraft gegeneinander verspannt sind.

Die dargestellte Schraubverbindungsanordnung 32 kann auf der Seite des zweiten Blockelements 14 auch eine mit der Schraube 34 bzw. deren Schaft 36 verbundene oder verbindbare Mutter (nicht dargestellt) aufweisen. In einem solchen Falle wäre der Schraubenschaft 36 etwas länger und würde an einer Außenseite 43 des zweiten Blockelements 14 anliegen. Die Schraubenverbindungsanordnung kann also auch als Schrauben-Mutter-Verbindung ausgeführt sein. In einem solchen Falle könnte die hier beim Schraubenkopf 40 dargestellte Unterlegscheibe 44 auch zwischen der nicht dargestellten Mutter und der Außenseite 43 des zweiten Blockelements 14 angeordnet sein. Alternativ zu einer Schraube kann auch ein durchgängiger Stehbolzen zum Einsatz kommen, der an der Außenseite 43 des zweiten Blockelements 14 über eine Mutter verschraubt werden kann. Ganz allgemein wird darauf hingewiesen, dass mit dem Begriff Schraubverbindungsanordnung jede Art der Verbindung der beiden Blockelemente umfasst sein soll, bei der die Fixierung der Blockelemente aneinander mittels eines Gewindeeingriffs von zwei Komponenten, wie etwa Schraube/Bolzen mit Mutter, Schraube in einem Innengwinde von einem (oder beiden) Blockelement(en) erfolgt.

Da bei Dichtungselementen 24 in Form einer Flachdichtung auch geringfügige Verdrehungen oder Querverschiebungen der beiden Blockelemente 12, 14 zueinander zu Leckagen im Kältemittelkreislauf führen können, weist die Blockverbindunganordnung wenigstens einen Verbindungsstift 46 auf. Der Verbindungsstift 46 ist bevorzugt aus einem stabilen Material, insbesondere aus Metall hergestellt. Im ersten Blockelement 12 ist ein erster Stiftaufnahmeabschnitt 48 ausgebildet. Das zweite Blockelement 14 weist einen zweiten Stiftaufnahmeabschnitt 50 auf. Die beiden Stiftaufnahmeabschnitte 48, 50 bilden gemeinsam eine Stiftaufnahme 52, in welcher der Verbindungsstift 46 im zusammengesetzten Zustand der beiden Blockelemente 12, 14 aufgenommen ist.

Der Verbindungsstift 46 dient im zusammengesetzten Zustand der Blockverbindungsanordnung 10 als Sicherungselement, durch das relative Bewegungen bzw. Verschiebungen der beiden Blockelemente 12, 14 zueinander eingeschränkt bzw. verhindert sind. Somit kann Querverschiebungen oder Verdrehungen der beiden Blockelemente 12, 14 zueinander entgegen gewirkt werden, so dass im Bereich des Dichtungselements 24 Leckagen vermieden werden können.

Die Schraubverbindungsanordnung 32 mit der elastischen Unterlegscheibe 44 und der Verbindungsstift 46, der in beiden Blockelementen 12, 14 aufgenommen ist, dienen sowohl einzeln, aber auch in Kombination einer verbesserten Verbindung und zuverlässigeren Abdichtung der Blockelemente 12, 14.

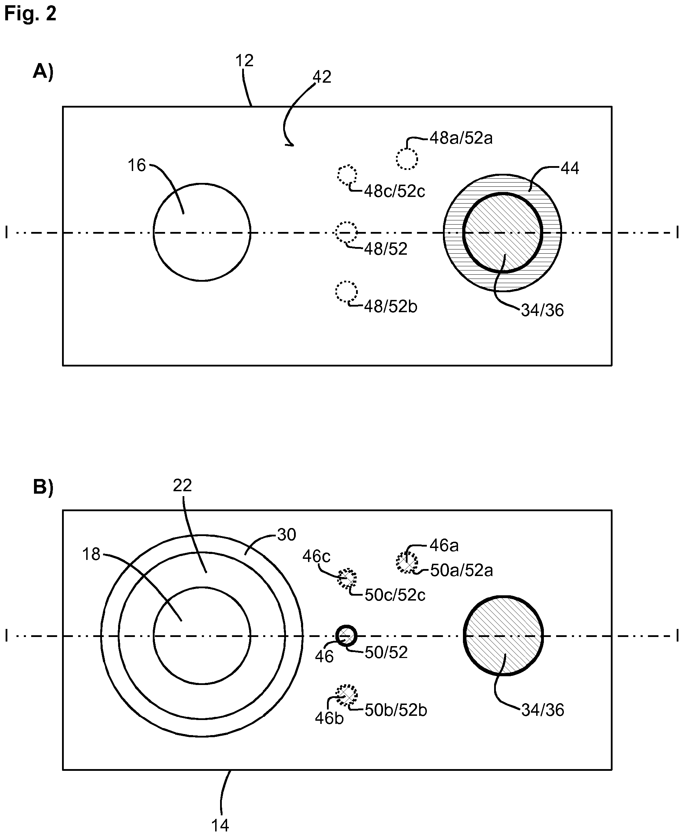

Fig. 2 zeigt in der Teilfigur A) eine vereinfachte und schematische Draufsicht auf die Außenseite 42 des ersten Blockelements 12, etwa entsprechend der Linie A-A der Fig. 1. In dieser Darstellung sind ersichtlich: der erste Kältemittelleitungsabschnitt 16, die Schraube 34 bzw. deren Schraubenschaft 36 und die elastische Unterlegschiebe 46. Ferner ist gestrichelt auch die Lage des ersten Stiftaufnahmeabschnitts 48 gezeigt. Die Ausgestaltung bzw. Ausprägung des Schraubenkopfes 40 kann in unterschiedlicher Weise wie beispielsweise Torx, Sechskant oder Innensechskant (Inbus) ausgebildet sein.

In der Fig. 2B ist eine vereinfachte und schematische Draufsicht auf das zweite Blockelements 14 gezeigt, etwa entsprechend der Linie B-B der Fig. 1. In dieser Darstellung sind ersichtlich: der zweite Kältemittelleitungsabschnitt 18, die Kopplungsaufnahme 22, die Ringnut 30, und die Schraube 34 bzw. deren Schraubenschaft 36. Der Verbindungsstift 46 ist in dem zweiten Stiftaufnahmeabschnitt 50 aufgenommen gezeigt.

In den Figuren 2A und 2B sind rein beispielhaft und als mögliche Ausgestaltung der Blockverbindungsanordnung 10 weitere Stiftaufnahmeabschnitte 48a, 48b bzw. 50a, 50b dargestellt. Durch diese weiteren Stiftaufnahmen 52a, 52b soll verdeutlicht werden, dass einerseits mehrere Verbindungsstifte 46, 46a, 46b für eine Blockverbindungsanordnung 10 eingesetzt werden können, und dass andererseits die Lage der Stiftaufnahmen 52a, 52b im Wesentlichen frei wählbar ist. Eine mögliche Ausgestaltung der Blockverbindungsanordnung 10 umfasst eine oder zwei Stiftaufnahmen, in denen ein jeweiliger Verbindungsstift aufgenommen ist.

Der Verbindungstift 46 und die zugehörigen Stiftaufnahmeabschnitte 48, 50 bzw. die zugehörige Stiftaufnahme 52 weisen in den gezeigten Beispielen ein kreisförmiges Schnittprofil auf. Es wird darauf hingewiesen, dass auch andere Querschnittsprofile möglich sind, etwa oval, ellipsenförmig oder vieleckig. Rein beispielhaft sind ein sechseckiger Verbindungsstift 46c und entsprechende Stiftaufnahmeabschnitte 48c, 50c in Fig. 2 gestrichelt angedeutet.

Der Verbindungstift 46 bzw. mehrere Verbindungstifte 46, 46a, 46b, 46c können auch als eine Art Codierung verwendet werden, insbesondere durch deren Anordnung an zu verbindenden Blockelementen 12, 14. Hierdurch wird sichergestellt, dass lediglich Blockelemente 12, 14 miteinander zusammengebaut bzw. verbunden werden, die auch zusammenpassen bzw. deren Stiftaufnahmeabschnitte 48, 50 fluchtend zueinander angeordnet sind bzw. angeordnet werden können.

Die Verbindungsstifte 46 können für den Zusammenbau von Blockelementen 12, 14 jeweils in einem der Blockelemente, beispielsweise im zweiten Blockelement 14, insbesondere in dessen Stiftaufnahmeabschnitt 50, vormontiert sein. Somit ist sichergestellt, dass mit dem zweiten Blockelement 14, in dem bereits ein Verbindungsstift 46 angeordnet ist, nur ein erstes Blockelement 12 verbunden wird, das einen korrespondierenden Stiftaufnahmeabschnitt 48 aufweist, in den der Verbindungstift 46 beim Zusammenbau einführbar ist.

Die hier gezeigte Blockverbindungsanordnung kommt insbesondere in Kälteanlagen zum Einsatz, die mit dem Kältemittel R744 (Kohlendioxid) unter hohem Druck und bei hohen Temperaturen betrieben werden. Derartige Kälteanlagen können insbesondere in Kraftfahrzeugen eingesetzt werden. Der Einsatz der oben beschriebenen Blockverbindungsanordnung ist aber nicht auf Kälteanlagen mit dem Kältemittel R744 beschränkt. Vielmehr kann mit der Blockverbindungsanordnung auch bei Kälteanlagen, in denen bekannte Kältemittel mit niedrigen Drucklagen eingesetzt werden, eine Steigerung der Dichtheit gegenüber bislang bekannter Verbindungstechniken erreicht werden.

## Patentansprüche

1. Blockverbindungsanordnung (10) für eine Kälteanlage eines Kraftfahrzeugs mit
einem ersten Blockelement (12), das einen ersten Kältemittelleitungsabschnitt (16) aufweist,
einem zweiten Blockelement (14), das einen zweiten Kältemittelleitungsabschnitt (18) aufweist,
wobei der erste Kältemittelleitungsabschnitt (16) und der zweite Kältemittelleitungsabschnitt (18) unter Zwischenlage von wenigstens einem Dichtungselement (24) miteinander verbindbar oder verbunden sind, wobei die Blockverbindungsanordnung (10) wenigstens einen Verbindungsstift (46, 46a, 46b, 46c) aufweist, der in einer Stiftaufnahme (52, 52a, 52b, 52c) aufnehmbar oder aufgenommen ist, wobei die Stiftaufnahme (52, 52a, 52b, 52c) einen ersten Stiftaufnahmeabschnitt (48, 48a, 48b, 48c) in dem ersten Blockelement (12) und einen zweiten Stiftaufnahmeabschnitt (50, 50a, 50b, 50c) in dem zweiten Blockelement (14) aufweist, derart dass im verbundenen Zustand der Blockelemente (12, 14) der Verbindungsstift (46, 46a, 46b, 46c) in dem ersten Stiftaufnahmeabschnitt (48, 48a, 48b, 48c) und dem zweiten Stiftaufnahmeabschnitt (50, 50a, 50b, 50c) aufgenommen ist,
**dadurch gekennzeichnet, dass** die Blockverbindungsanordnung (10) eine Schraubverbindungsanordnung (32) aufweist mit einer Schraube (34), durch die das erste Blockelement (12) und das zweite Blockelement (14) gegeneinander verspannbar oder verspannt sind, wobei zwischen einem Schraubenkopf (40) oder einer Mutter der Schraubverbindungsanordnung (32) und einer Außenseite (42) des ersten Blockelements (12) oder einer Außenseite des zweiten Blockelements (14) eine zum Schraubenkopf (40) oder zur Mutter hin konvex gewölbte, elastische Unterlegscheibe (44) aufgenommen ist.

2. Blockverbindungsanordnung nach Anspruch 1, **dadurch gekennzeichnet, dass** der Verbindungsstift (46, 46a, 46b, 46c) aus Metall hergestellt ist.

3. Blockverbindungsanordnung nach Anspruch 1 oder 2, **dadurch gekennzeichnet, dass** der Verbindungsstift (46, 46a, 46b) im Querschnitt ein kreisförmiges Profil aufweist.

4. Blockverbindungsanordnung nach Anspruch 1 oder 2, **dadurch gekennzeichnet, dass** der Verbindungsstift (46c) im Querschnitt ein ovales oder ellipsenförmiges oder vieleckiges Profil aufweist.

5. Blockverbindungsanordnung nach Anspruch 3 oder 4, **dadurch gekennzeichnet, dass** die Stiftaufnahme (52, 52a, 52b, 52c) eine zum Querschnittsprofil des Verbindungsstifts (46, 46a, 46b, 46c) passende Form aufweist.

6. Blockverbindungsanordnung nach einem der vorhergehenden Ansprüche, **dadurch gekennzeichnet, dass** sie zwei Verbindungsstifte (46, 46a, 46b, 46c) und zwei zugeordnete Stiftaufnahmen (52, 52a, 52b, 52c) aufweist, in denen jeweils ein Verbindungsstift (46, 46a, 46b, 46c) aufnehmbar oder aufgenommen ist.

7. Blockverbindungsanordnung nach einem der vorhergehenden Ansprüche, **dadurch gekennzeichnet, dass** das Verschraubmoment der Schraubenverbindungsanordnung (32) im verbundenen Zustand der Blockelemente von 10Nm bis 20Nm beträgt, insbesondere von 12Nm bis 18Nm.

8. Blockverbindungsanordnung nach Anspruch 7, **dadurch gekennzeichnet, dass** die Unterlegscheibe (44) im verbundenen Zustand der Blockelemente (12, 14) nur elastisch verformt ist.

9. Blockverbindungsanordnung nach einem der vorhergehenden Ansprüche, **dadurch gekennzeichnet, dass** das Dichtungselement (24) als metallische Flachdichtung ausgebildet ist.

10. Kälteanlage für ein Kraftfahrzeug mit wenigstens einer Blockverbindungsanordnung (10) nach einem der vorhergehenden Ansprüche.

11. Kälteanlage nach Anspruch 10, wobei das in der Kälteanlage zirkulierende Kältemittel Kohlendioxid (R744) ist.

12. Kraftfahrzeug mit einer Kälteanlage nach Anspruch 10 oder 11.

## Claims

1. Unit connection arrangement (10) for a refrigeration system of a motor vehicle with
a first unit element (12) having a first refrigerant conduit portion (16),
a second unit element (14) having a second refrigerant conduit portion (18),
wherein the first refrigerant conduit portion (16) and the second refrigerant conduit portion (18) can be or are connected to each other with the interposition of at least one sealing element (24),
wherein the unit connecting arrangement (10) has at least one connecting pin (46, 46a, 46b, 46c) which can be or is received in a pin receiving means (52, 52a, 52b, 52c), wherein the pin receiving means (52, 52a, 52b, 52c) has a first pin receiving portion (48, 48a, 48b, 48c) in the first unit element (12) and a second pin receiving portion (50, 50a, 50b, 50c) in the second unit element (14), such that in the connected state of the unit elements (12, 14) the connecting pin (46, 46a, 46b, 46c) can be or is received in the first pin receiving portion (48, 48a, 48b, 48c) and the second pin receiving portion (50, 50a, 50b, 50c),
**characterised in that** the unit connection arrangement (10) has a threaded connection arrangement (32) with a bolt (34) by means of which the first unit element (12) and the second unit element (14) can be or are clamped against one another, wherein between a bolt head (40) or a nut of the threaded connection arrangement (32) and an outer side (42) of the first unit element (12) or an outer side of the second unit element (14) there is accommodated an elastic washer (44) convexly curved towards the bolt head (40) or towards the nut.

2. Unit connection arrangement according to claim 1, **characterised in that** the connection pin (46, 46a, 46b, 46c) is made of metal.

3. Unit connection arrangement according to claim 1 or 2, **characterised in that** the connection pin (46, 46a, 46b) has a circular profile in cross-section.

4. Unit connection arrangement according to claim 1 or 2, **characterised in that** the connection pin (46c) has an oval or elliptical or polygonal profile in cross-section.

5. Unit connection arrangement according to claim 3 or 4, **characterised in that** the pin receiving means (52, 52a, 52b, 52c) has a shape matching the cross-sectional profile of the connection pin (46, 46a, 46b, 46c).

6. Unit connection arrangement according to any one of the preceding claims, **characterised in that** it has two connection pins (46, 46a, 46b, 46c) and two associated pin receiving means (52, 52a, 52b, 52c), in each of which a connection pin (46, 46a, 46b, 46c) can be or is received.

7. Unit connection arrangement according to any one of the preceding claims, **characterised in that** the make-up torque of the threaded connection arrangement (32) in the connected state of the unit elements is from 10Nm to 20Nm, in particular from 12Nm to 18Nm.

8. Unit connecting arrangement according to claim 7, **characterised in that** in the connected state of the unit elements (12, 14) the washer (44) is only elastically deformed.

9. Unit connection arrangement according to any one of the preceding claims, **characterised in that** the sealing element (24) is configured as a metallic flat seal.

10. Refrigeration system for a motor vehicle comprising at least one unit connection arrangement (10) according to any one of the preceding claims.

11. Refrigeration system according to claim 10, wherein the refrigerant circulating in the refrigeration system is carbon dioxide (R744).

12. Motor vehicle comprising a refrigeration system according to claim 10 or 11.

## Revendications

1. Agencement d'assemblage bloc (10) pour un système de refroidissement d'un véhicule automobile avec
un premier élément bloc (12), qui présente une première section de conduite d'agent de refroidissement (16),
un second élément bloc (14), qui présente une seconde section de conduite d'agent de refroidissement (18),
dans lequel la première section de conduite d'agent de refroidissement (16) et la seconde section de conduite d'agent de refroidissement (18) avec interposition d'au moins un élément d'étanchéité (24) peuvent être assemblés ou sont assemblés entre eux,
dans lequel l'agencement d'assemblage bloc (10) présente au moins une tige d'assemblage (46, 46a, 46b, 46c), qui peut être logée ou est logée dans un logement de tige (52, 52a, 52b, 52c), dans lequel le logement de tige (52, 52a, 52b, 52c) présente une première section de logement de tige (48, 48a, 48b, 48c) dans le premier élément bloc (12) et une seconde section de logement de tige (50, 50a, 50b, 50c) dans le second élément bloc (14), de sorte qu'à l'état assemblé des éléments blocs (12, 14) la tige d'assemblage (46, 46a, 46b, 46c) est logée dans la première section de logement de tige (48, 48a, 48b, 48c) et la seconde section de logement de tige (50, 50a, 50b, 50c),
**caractérisé en ce que** l'agencement d'assemblage bloc (10) présente un agencement d'assemblage par vis (32) avec une vis (34), par laquelle le premier élément bloc (12) et le second élément bloc (14) peuvent être assemblés par serrage ou sont assemblés par serrage l'un contre l'autre, dans lequel une rondelle (44) élastique, convexe jusqu'à la tête de vis (40) ou jusqu'à l'écrou est logée entre une tête de vis (40) ou un écrou de l'agencement d'assemblage par vis (32) et une face extérieure (42) du premier élément bloc (12) ou une face extérieure du second élément bloc (14).

2. Agencement d'assemblage bloc selon la revendication 1, **caractérisé en ce que** la tige d'assemblage (46, 46a, 46b, 46c) est fabriquée à partir de métal.

3. Agencement d'assemblage bloc selon la revendication 1 ou 2, **caractérisé en ce que** la tige d'assemblage (46, 46a, 46b) présente un profil circulaire en section transversale.

4. Agencement d'assemblage bloc selon la revendication 1 ou 2, **caractérisé en ce que** la tige d'assemblage (46c) présente en section transversale un profil ovale ou de forme elliptique ou polygonal.

5. Agencement d'assemblage bloc selon la revendication 3 ou 4, **caractérisé en ce que** le logement de tige (52, 52a, 52b, 52c) présente une forme correspondant au profil en section transversale de la tige d'assemblage (46, 46a, 46b, 46c).

6. Agencement d'assemblage bloc selon l'une quelconque des revendications précédentes, **caractérisé en ce qu'**il présente deux tiges d'assemblage (46, 46a, 46b, 46c) et deux logements de tiges (52, 52a, 52b, 52c) associés, dans lesquels respectivement une tige d'assemblage (46, 46a, 46b, 46c) peut être logée ou est logée.

7. Agencement d'assemblage bloc selon l'une quelconque des revendications précédentes, **caractérisé en ce que** le couple de vissage de l'agencement d'assemblage par vis (32) à l'état assemblé des éléments blocs va de 10 Nm à 20 Nm, en particulier de 12 Nm à 18 Nm.

8. Agencement d'assemblage bloc selon la revendication 7, **caractérisé en ce que** la rondelle (44) est uniquement déformée élastiquement à l'état assemblé des éléments blocs (12, 14).

9. Agencement d'assemblage bloc selon l'une quelconque des revendications précédentes, **caractérisé en ce que** l'élément d'étanchéité (24) est conçu en tant que joint plat métallique.

10. Système de refroidissement pour un véhicule automobile doté d'au moins un agencement d'assemblage bloc (10) selon l'une quelconque des revendications précédentes.

11. Système de refroidissement 10, dans lequel l'agent de refroidissement circulant dans le système de refroidissement est du dioxyde de carbone (R744).

12. Véhicule automobile doté d'un système de refroidissement selon la revendication 10 ou 11.
